# EUROPEAN PATENT SPECIFICATION

(11) **EP 2 780 604 B1**
(45) Date of publication and mention of the grant of the patent: **23.11.2016**
(21) Application number: 13702541.7
(22) Date of filing: 17.01.2013
(51) Int. Cl.: F16B 13/12

(54) **CONTROLLED EXPANSION ANCHOR, SCREW AND ANCHORING DEVICE MADE THEREFROM**
GESTEUERTER SPREIZANKER, SCHRAUBE UND VERANKERUNGSVORRICHTUNG DARAUS
COQUILLE D'EXPANSION RÉGULÉE, VIS ET DISPOSITIF D'ANCRAGE FORMÉS À PARTIR DE CELUI-CI

(30) Priority: 19.01.2012 IT TO20120036
(43) Date of publication of application: 24.09.2014
(73) Proprietor: Illinois Tool Works Inc., Glenview, IL 60025 (US)
(72) Inventor: LUCON, Michele, I-35127 Padova (IT); VEDOVATO, Diego, I-35127 Padova (IT)
(74) Representative: Plebani, Rinaldo
(86) International application number: PCT/US2013/021871
(87) International publication number: WO 2013/109710

(56) References cited:
- EP-A1- 1 435 464
- EP-A1- 2 251 555
- DE-A1- 19 707 604
- DE-U1-202010 012 084

## Description

### TECHNICAL FIELD

The present invention relates to an expansion anchor structured for anchoring a screw to a wall or to another supporting element (doors, fixtures, panels) of any nature and made of any material, even friable, through a controlled expansion of the anchor body. The invention further relates to a screw especially designed for such an anchor and to the anchoring device obtainable by the insertion of the screw into the anchor body.

### BACKGROUND ART

It is known that an expansion anchor is an anchoring element adapted to be fitted into a hole obtained on the supporting element, and comprises a head and a deformable tubular body within which a through longitudinal seat is delimited, open at least towards the head, capable of accommodating a tightening screw therein, having a larger section than the seat in the expansion zone, adapted to radially deform in use the anchor so as to increase the section thereof, so as to determine the locking of the anchor itself on the supporting element. In the type of interest in the present invention, the anchor passes through the element to be anchored, and together with the screw it contributes to the supporting function; therefore, through this system an object or bracket or support can be anchored to the supporting element. In the case of the system in question, for example, metal brackets are anchored for supporting coverings on concrete walls, or wooden splints of various thickness are anchored for supporting the insulation on walls of various masonry or on roofing of bricks and/or having various structure.

As is known from EP1435464, for example, expansion anchors of the above-described type are integrally made of a homogeneous plastic material, generally characterized by a relatively low specific stiffness, and especially provided at least along the anchor body with one or more radially through slits or openings, so as to ensure sufficient deformability and flexibility of the tubular body which, once deformed, generally takes on a typical "cask" shape.

While such known anchors are generally satisfactory, since they do not have an evenly distributed expansion on the whole expansion length, they are unable to fully use the reduced supporting capabilities of relatively soft and friable materials, such as cellular concrete or lightened bricks or bricks characterized by the presence of diffused gaps. DE19707604A1 *does not solve this problem*.

On the other hand, it would be desirable to provide an anchor which is capable of being used, without distinction, on materials even very different from one other and which is capable of exploiting the supporting capabilities of the different materials without overloading some zones or without actually loading other ones. Moreover, it would be useful to have different possible sinking depths according to the material and to the load applied so as to reduce the laying time when possible, e.g. on concrete, or obtain better performance by virtue of larger laying depths on less compact materials, such as cellular concrete.

### DISCLOSURE OF INVENTION

Therefore, the object of the present invention is to provide an anchoring device which is capable of being used, without distinction, on supporting elements made of materials even very different from one other by compactness and in general, also highly anisotropic, easy and inexpensive to be made, and allowing different sinking depths to always be obtained with the utmost safety.

According to the present invention, an expansion anchor, screw for an expansion anchor and an anchoring device consisting of the above anchor and screw coupled to each other is thus provided as defined in claim 1 and in the following claims.

Such a device, consisting of an expansion anchor and a specific screw, also has the feature of being able to have different anchoring depths in order to have the maximum capacities in relation to the different building support materials and in relation to the quickest possible installation. This happens despite the reduced drilling diameter, with respect to anchoring devices normally used nowadays for the same applications. The system consisting of the anchoring device according to the invention is then characterized by an initially reduced tightening torque, little increasing in the step of screwing, and exponentially increasing in the step of completed tightening.

The expansion anchor according to the invention is characterized in that at least one longitudinal main expansion portion of the body, distal from the head, consists of a plurality of modules sequentially arranged along the anchor axis and longitudinally crossed by the screw seat, adapted to be deformed in use, upon the progressive introduction of the screw into the seat, each one locally and with a predetermined sequence, in a substantially even fashion with respect to one other. Then, a secondary expansion zone exists, closer to the head, comprising at least one module, characterized by a controlled expansion which may concur or not to the anchoring action, according to the selected anchoring or sinking depth; such an expansion takes place upon the sequential expansion of the main expansion modules of the body portion, distal from the head, since in such a zone the inner diameter of the through seat for the screw is larger than in the main expansion zone.

In combination, the screw has a shank which, starting from a free end thereof opposite to the screw head, comprises threaded stretches arranged axially in a sequence having thread core and crest diameters differently increasing towards the head, with the same pitch but also with a different threading profile; in particular, it should be noted that the outer diameter of the thread (crest diameter) in the zone closer to the screw head is larger than the other zones of the screw shank.

Thereby, the anchoring system consisting of the anchor plus screw device according to the invention is capable of anchoring to the support material through the hole made in the material itself, substantially and evenly on the whole length of the hole concerned by the anchor body, irrespective of the compactness and isotropy or anisotropy features of the support material; the perfect distribution and evenness of the expansions determine distributed and even reactions of the support material, which finally determine a much higher total extraction load of the system.

Everything is obtained with smaller diameters of the anchor body than the anchors of the prior art; with reduced and slowly increasing tightening torques up to full tightening; with the guarantee of not damaging uneven friable or in any case low-density materials, such as lightened bricks, due to the overload on some zones.

### BRIEF DESCRIPTION OF THE DRAWINGS

Further features and advantages of the present invention will become apparent from the following description of a non-limiting embodiment thereof, provided by way of example and made with reference to the figures in the accompanying drawings, in which:
- figure 1 shows a perspective front three-quarter view of an expansion anchor made according to the teachings of the present invention;
- figure 2 shows an orthogonal projection front view of the anchor in figure 1;
- figures 3 and 4 show two longitudinal views cutaway according to trace planes III-III and IV-IV of the anchor in figure 1;
- figures 5 and 6 show two longitudinal views cutaway according to two planes perpendicular to each other of the anchor in figure 1;
- figure 7 shows an exemplary comparison between the operation of the anchor in figures 1-6 and an anchor of the prior art, both coupled to a corresponding screw to form an anchoring device;
- figure 8 shows a perspective back three-quarter view on enlarged scale of a detail of the body of the anchor in figure 1;
- figure 9 shows a screw according to the invention especially devised for the coupling to the anchor in figures 1-6;
- figure 10 shows a perspective front three-quarter view of the anchor in figures 1-6 transversally cutaway at an expansion module thereof; and
- figure 11 shows a possible variant of the screw in figure 9.

### BEST MODE FOR CARRYING OUT THE INVENTION

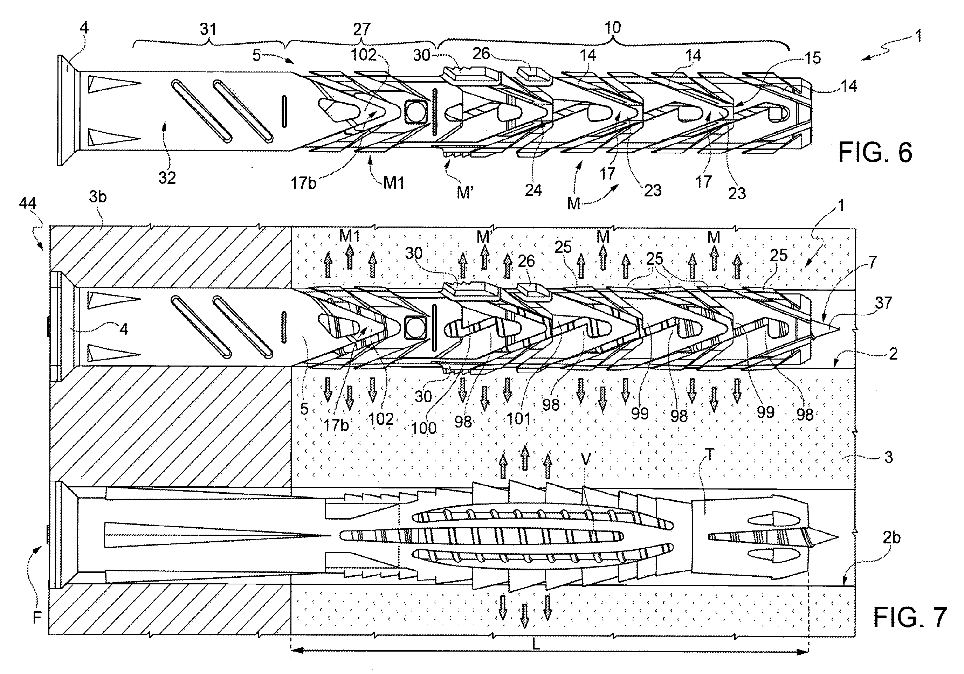

With reference to the accompanying figures, reference numeral 1 indicates as a whole an expansion anchor, which is adapted to be fitted into a hole 2 (figure 7) obtained through at least one supporting element 3, such as a building panel or wall, with a longitudinal symmetry axis A thereof coaxial to the axis of hole 2.

Anchor 1 comprises a head 4 and a deformable tubular body 5 insertable in use into hole 2 made through the supporting element 3, and preferably (figure 7) also through a second element 3b intended to be anchored to element 3.

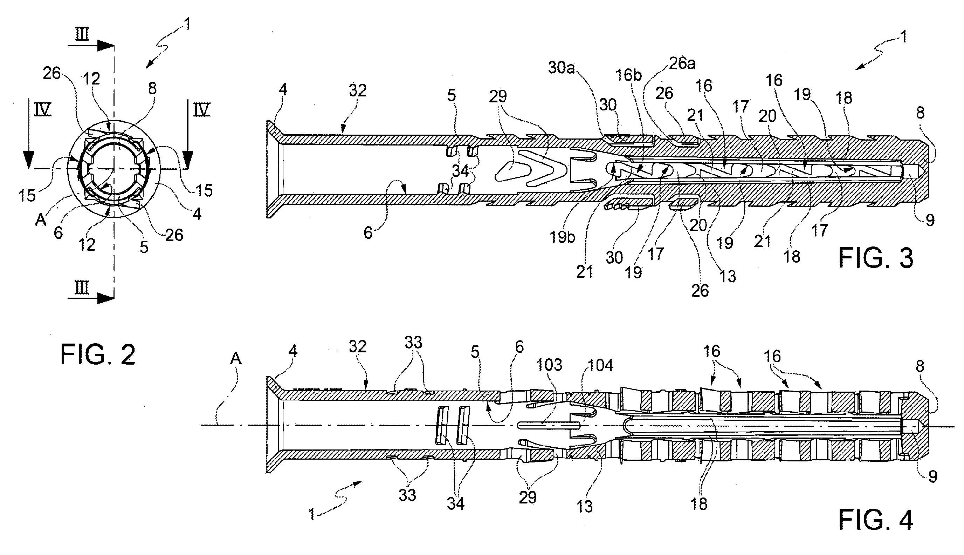

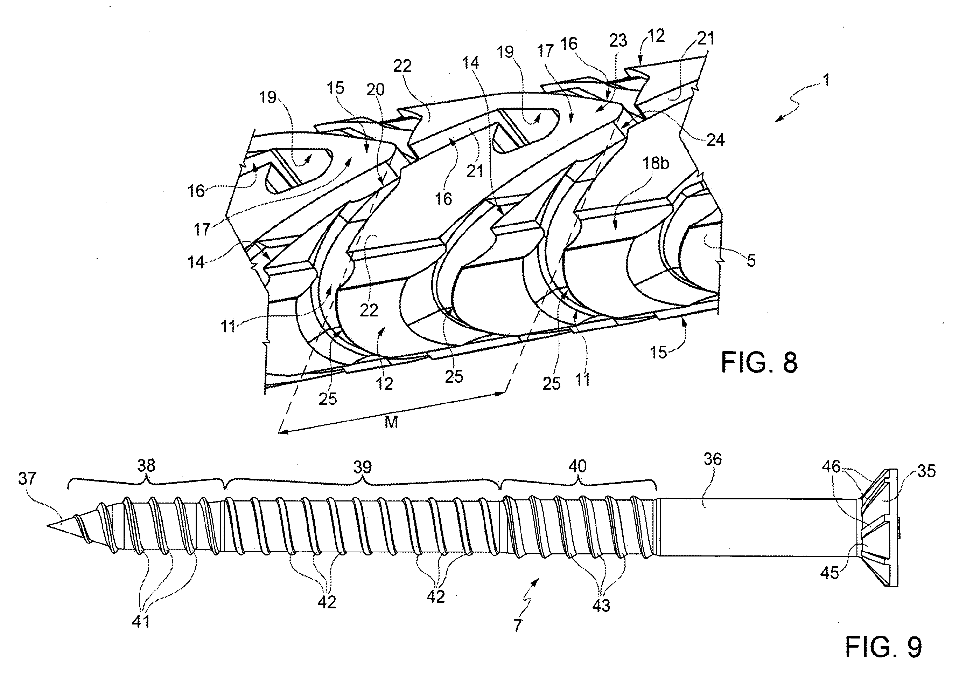

Body 5 extends so as to protrude from head 4 along the longitudinal symmetry axis A of anchor 1 and a longitudinal seat 6 is delimited therein (figures 2, 3, 4 and 10), open at least towards head 4, adapted to accommodate in use a tightening screw 7 or 7b therein (figures 9, 7 and 11) for locking body 5 into hole 2.

Preferably, on the side opposite to head 4, seat 6 is blind as it is closed by a wall 8 which, however, is intended in use to be cut by screw 7, so as to allow the latter to protrude from body 5, if necessary, and to this end it is provided with a blind weakening hole 9 arranged coaxially to axis A, which is also the symmetry axis of seat 6.

According to a feature of the invention, at least one longitudinal portion 10 of body 5, distal from head 4, consists of a plurality of modules M, one of which is well shown by way of example in an enlarged scale in figure 8, longitudinally crossed by seat 6 for screw 7 or 7b and adapted to be deformed in use, upon the progressive introduction of screw 7 into seat 6, each one locally and in a sequence one after the other, in a substantially even manner with respect to one other, as is well shown in figure 7.

Such modules M are arranged in a sequence along the symmetry axis A and are obtained integrally with one other and with head 4, one immediately adjacent to the other, so that the whole anchor 1 may be made as a single piece by molding a synthetic plastic material.

With particular reference to figure 8, each module M is defined by an annular longitudinal stretch of body 5 between pairs of first grooves 11 obtained externally on first longitudinal opposite bands or sides 12 of a lateral wall 13 of body 5 and between pairs of second grooves 14 obtained externally on second longitudinal opposite bands or sides 15 of the lateral wall 13 oriented, in a plane orthogonal to axis A (i.e. in the plane of the sheet in figure 2), in a direction substantially orthogonal to the first bands or sides 12; grooves 11 and 14 generally have a smaller depth, measured in radial direction, than the local radial thickness of the lateral wall 13.

Moreover, each module M is provided with a pair of opposite slits 16 (only one of which is seen in figure 8) radially obtained through the lateral wall 13 at both the second bands 15 and at least at part of grooves 14; according to an aspect of the invention, slits 16 are shaped so as to pull off, on the lateral wall 13, between each pair of grooves 14 immediately adjacent to one other and obtained on a same band 15, respective radially flexible, bridge-shaped wings 17 which connect the first bands 12 to one another and which extend so as to protrude from the first bands 12 and along the second bands 15 in the direction of introduction of screw 7/7b into seat 6.

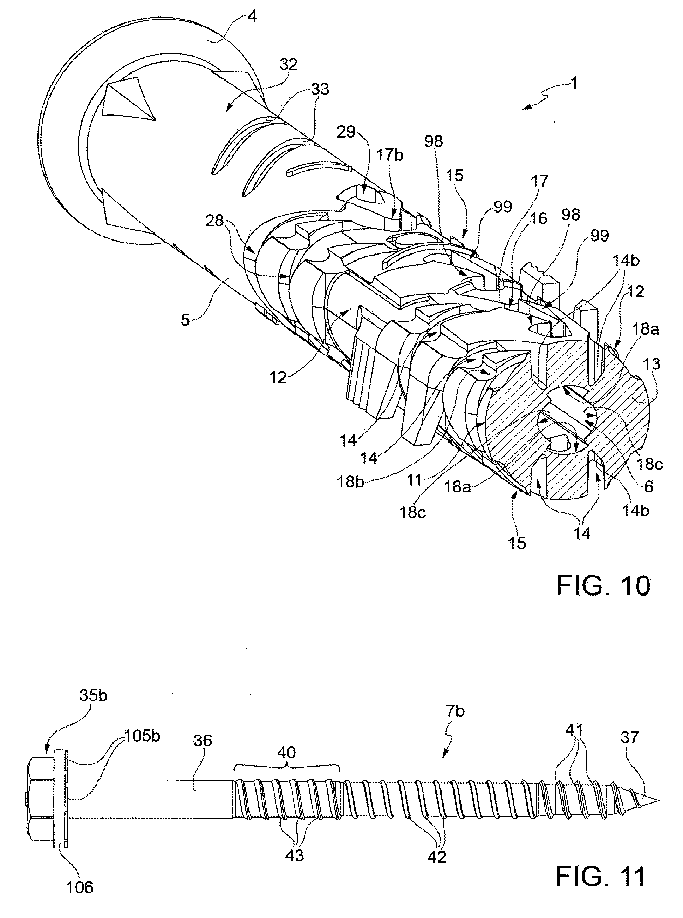

Moreover, according to a further important aspect of the invention, along at least the whole longitudinal portion 10 distal from head 4, the lateral wall 13 of body 5 has third longitudinal grooves 18a, 18b, substantially rectilinear and parallel to axis A, obtained in pairs in corresponding angular positions, grooves 18b outside body 5 and grooves 18a within seat 6; with particular reference to figure 10, grooves 18b obtained outside body 5 are provided in a number of four and longitudinally delimit, in pairs, the longitudinal lateral sides or bands 12 and 15, which form the lateral wall 13, defining the "boundaries" of the same; they are angularly arranged at the opposite longitudinal end sides of a single pair of opposite inner grooves 18a of seat 6 and create the mobility of zones 98 and 99 of the lateral wall 13, at each module M which, in the step of inserting screw 7 or 7b, are radially expanded in opposite direction, against the walls of hole 2.

According to the preferred embodiment shown, grooves 14 further extend on at least a part of bands 12 (figure 8), each between a pair of grooves 11, which in turn extend on at least a part of bands 15, each one to intercept a groove 14.

Grooves 14, where they are not concerned by slits 16, have a progressively increasing depth in the radial direction as they approach end 8, and therefore as they approach slits 16, thus forming inclined planes 14b (figure 10) arranged obliquely with respect to axis A and which have an inclination facing axis A; these inclined planes 14b promote in use, as will be seen, the "hinged" movement of wings 17, as well as contribute, together with grooves 18a, to creating zones with a thinned thickness of the lateral wall which contribute to the mobility of areas 98 and 99.

In particular, looking at body 5 in a direction substantially perpendicular to bands 15 (i.e. perpendicular to the plane of the sheet in figures 3 and 6), each slit 16 comprises (figures 3 and 8): a first perforation 19 having the shape of an isosceles triangle with rounded vertexes having the base facing head 4; a second perforation 20, arranged upstream of perforation 19 in the direction of introduction of screw 7 into seat 6, substantially dovetail-shaped in such a direction of introduction of screw 7 into seat 6; and a longitudinal slot 21 obtained obliquely to axis A and connecting perforations 19 and 20 to each other.

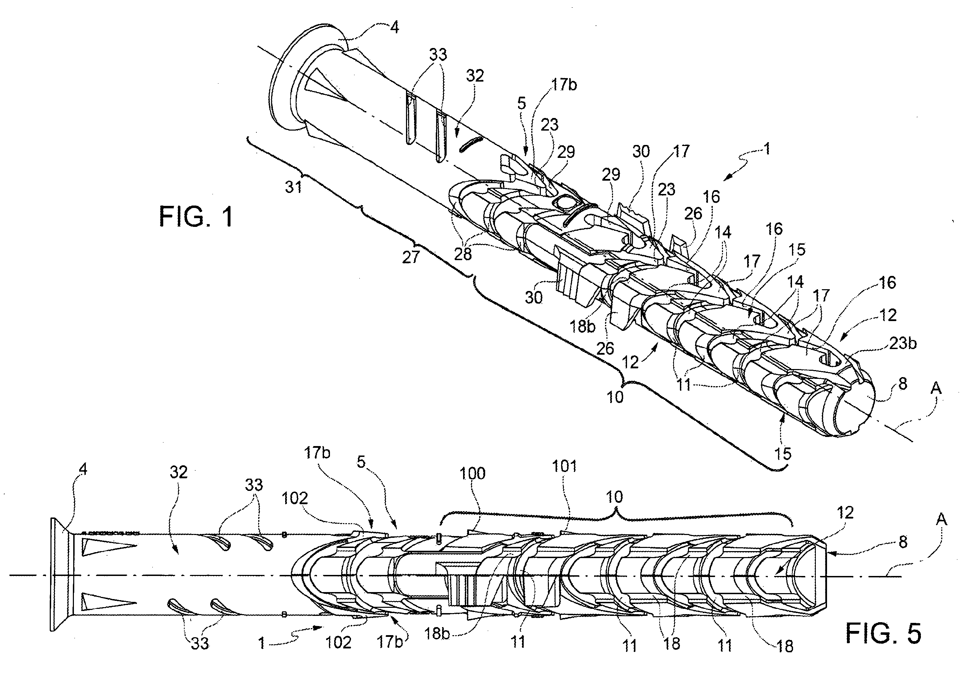

Moreover, looking at body 5 in a direction substantially perpendicular to bands 12, i.e. perpendicular to the plane of the sheet in figure 5, slits 11 are shaped as arches having the convexity facing head 4. Likewise, looking at body 5 in a direction substantially perpendicular to bands 15 (perpendicular to the plane of the sheet in figure 6), grooves 14 are shaped substantially as arrow heads facing the side opposite to head 4; the extension of grooves 14 on bands 12 (figure 8) is obtained by shaping grooves 14 so that they bend with the convexity facing head 4, to substantially reproduce the profile of grooves 11.

Finally, looking again at body 5 in a direction substantially perpendicular to bands 15 (perpendicular to the plane of the sheet in figures 6 and 3), the elastically deformable wings 17 are each substantially shaped as a V-shaped overhanging bridge having opposite branches 22 (figure 8) integrally connected in one piece to body 5 on the side facing head 4 and having the vertex facing the side opposite to head 4 and forming a free end 23 of wing 17 which extends so as to protrude in the direction of introduction of screw 7 into seat 6.

Thereby, wings 17 are radially flexible both towards axis A, so as to be adapted to take their free ends 23 to bend in use towards the interior of seat 6 when introducing body 5 into hole 2 of the at least one supporting element 3, and radially towards the exterior of body 5, due to, by virtue of said inclined planes 14b, the introduction in use of screw 7 or 7b into seat 6 which, causing the enlargement of the seat 6 itself, causes deformations which make the free ends 23 place radially projecting so as to protrude from body 5 up to interfere with the lateral wall of hole 2; moreover, the free ends 23 of wings 17 are preferably provided with relatively sharp edges 24, and taper towards the vertex of the V, for promoting the above-described "hinged" operation thereof.

Grooves 11 are also provided, on the side of head 4, with a relatively sharp edge 25 (figure 8), as well as the extensions of grooves 14; edges 25 radially extend outwards to a minimum extent from body 5 and are then brought in use to "clamp" the material of element 3, i.e. the lateral wall of hole 2, by the deformation (radial expansion) of modules M; moreover, at least two of modules M, and in particular those closer to head 4, are further provided with a pair of substantially stiff wings 26 and 30 which extend transversally and radially so as to protrude from bands 12 of the lateral wall 13 of body 5, starting tangentially with respect to body 5, from opposite sides thereof, to then progressively move away from axis A in a radial direction (figures 1, 2 and 3). Such wings, protruding in clockwise direction if seen from the side of head 4, or in counterclockwise direction if seen from end 8 (see figure 2), have a trapezoidal geometry with inclination towards the free end thereof and, due to this configuration, upon the introduction into hole 2 get deformed and lay down into seats 30a and 26a (figure 3) obtained on the outer surface of body 5, thus facilitating the insertion of the anchor body 5 into hole 2 but, having an elastic memory which tends to place them back to the original shape, they push against the walls of hole 2, providing a suitable contrast to the natural clockwise rotation of the anchor body 5 determined by screwing screw 7/7b into seat 6.

At zones 99, at least two of modules M, and in particular those closer to head 4, have reinforcing inclined projections 100 and 101 (figures 5 and 7) with respect to the circular diameter of the anchor body 5: such projections 100 and 101, which in the step of inserting into hole 2 create a forced compression of seat 6 (with consequent slight radial narrowing of the same), in the step of screwing screw 7/7b, press more against the walls of hole 2, thus creating suitable and further blocks contrasting the natural clockwise rotation of body 5.

Between head 4 and the longitudinal portion 10 of body 5 distal from head 4, body 4 preferably comprises a first middle longitudinal portion 27 including one (in the example shown) or even more secondary expansion modules M1 (figures 1, 6 and 7) adapted to get deformed in use, as will be seen, as a consequence of the progressive introduction of screw 7 into the part of seat 6 externally defined by portion 27, but only after the expansion of all modules M.

Moreover, it should be noted that the module of portion 10 which is immediately adjacent the middle portion 27 and thus, to module (or modules) M1, consists of a module M' identical to above-described modules M, with the exception that slit 16 is replaced by a slit 16b, which is similar to slit 16 but in place of the second dovetail-shaped perforation 20, it has a second triangular perforation 19b with rounded vertex, arranged symmetrically opposite to perforation 19, therefore having the vertex facing towards head 4. Such a module M' is that provided with wings 30 and with the corresponding seat 30a.

With reference to figure 9, screw 7 comprises a head 35 adapted in use to abut against an element 3b to be anchored to the supporting element 3 (figure 7), and a shank 36 adapted to screw in use within seat 6 of body 5 of anchor 1 for radially expanding the latter. According to the invention, shank 36 comprises, starting from a free end 37 thereof opposite to head 35, three threaded stretches 38, 39 and 40 arranged axially in a sequence and having different core diameters (i.e. of the portion of the transversal shank section measured at the base of the longitudinal profile of the thread), in particular increasing towards 35, preferably equal pitch, and different threading profile with larger crest diameter of the thread in zone 40 (i.e. at the radially outermost top of the thread) than stretches 38 and 39.

Stretch 38 close to the free end 37, has a substantially triangular and relatively sharp profile of the crests of respective threads 41 thereof in the longitudinal direction; stretch 39, immediately subsequent to 38, has a substantially triangular rounded profile of the crests of respective threads 42 thereof in the longitudinal direction; and stretch 40, immediately subsequent to 39, has a substantially saw tooth profile of the crests of respective threads 43 thereof in longitudinal direction, having two opposite and different inclinations.

Module M1 is defined by respective grooves or rims 28 obtained on bands 12 of body 5 and by respective radially through and non-through perforations 29, made through bands 15 of body 5, so that this module M1 is provided with at least one pair of opposite wings 17b on bands 15 (figure 1), substantially identical to wings 17, radially flexible and also forming V-shaped overhanging bridges between the opposite bands 12 and having the free end 23 facing the side opposite to head 4. In particular, the structure of module M1 provides for the overhanging ends 23 to be suitably reinforced on the outside of body 5 so as to define respective asymmetric teeth 102 each delimited by a radially outer surface inclined towards end 8 with respect to axis A; such inclination allows the compression of bridge or wing 17b within seat 6, in the step of inserting the anchor body 5 into hole 2, and thereafter, a stronger expansion action due to the insertion of the threaded stretch 40 of screw 7 into the part of seat 6 concerning portion 27. Such an insertion, which takes place forcedly once stretches 38 and 39 have reached and have screwed into portion 10, causing the expansion of modules M and M', causes the expansion of module M1, which accordingly takes place only after the expansion of modules M and M'.

Between head 4 and the longitudinal portion 10 of body 5, distal from head 4, body 5 further comprises a second middle longitudinal portion 31, adjacent to head 4, delimited by a substantially cylindrical outer lateral surface 32 provided along both bands 15 of body 5 with weakening grooves 33 of the lateral wall 13 of body 5 arranged obliquely to axis A, according to the direction of development of the coils of a helical spring ideally wound on surface 32. In the step of completing the operation of screwing screw 7 or 7b into seat 6, such weakening grooves 33 allow portion 31 to be shortened in order to compensate any level variations of the support surface for head 4 onto element 3b and/or for allowing a complete pressure of the object to be anchored pushed by head 4 against the surface of the material of the supporting element 3.

Still in portion 31 delimited by surface 32 but within seat 6 and at bands 12 of body 5, circumferential ribs 34 are created (figure 4), axially staggered by a distance equal to the pitch of screw 7/7b and inclined with an angle equal to the angle of the screw thread and thus of threads 41, 42 and 43.

Ribs 34, placed close to module M1, allow an initial screwing of stretch 38 of screw 7, locking it onto body 5, within seat 6, at the beginning of stretch 39. This allows screw 7 to be pre-mounted on the anchor body 5, thus providing the user with an anchoring device 44 (figure 7), consisting of screw 7 (or 7b) and anchor 1 already pre-mounted, adapted to be easily and simply inserted into hole 2, only with a slight percussion on head 35 of screw 7, without risking that screw 7 may further enter into the anchor body 5 due to the percussions, causing the early expansion thereof.

In the zone between module M1 and the last module M, i.e. module M', within seat 6 and at bands 12 of body 5, further ribs 103 and 104 are further created (figure 4) which, suitably shaped, facilitate the insertion and the initial screwing of screw 7 (or 7b) at stretch 38 of the same which, as already seen, in order to better couple with ribs 103 and 104, has a substantially triangular and relatively sharp profile of the crests of respective threads 41 thereof.

The head 35 of screw 7 may be of the "flared" type, delimited towards shank 36 by a conical surface 45 provided with a series of longitudinal ribs 46 which protrude from surface 45 along a series of generatrices of the same and are inclined in counterclockwise direction, looking at the screw from end 37 thereof. In this case, the head 4 of the anchor body 5 will also be of the flared type, as shown in figure 7, and ribs 46, in the last steps of tightening screw 7, will press and incise the inner surface of head 4 of the anchor body 5, providing a further lock and control of the correct tightening as they are obliquely directed with respect to axis A, without the risk of applying excessive tightening torques to device 44, which may cause the breaking of one of the two elements of the device/system itself (anchor body 5 and screw 7).

Likewise, the head of screw 7 may be hexagonal or hexagonal with under-head washer, as in the case of a head 35b of the version of screw 7b shown in figure 11, for the rest identical to the already described screw 7 and where details similar or equal to those described for screw 7 are indicated with the same reference numerals.

In this case, the anchor head 4 may be flared or flat, and ribs 105b will protrude from the surface of an under-head washer 106 along a series of generatrices of the same, inclined in counterclockwise direction, looking at the screw from end 37.

Once the above-described anchor 1 and screw 7 (or 7b) are coupled to each other, they define, as already indicated, an anchoring device (or system) 44 alternative to a similar anchoring device F (figure 7) consisting of a traditional anchor T and an equally traditional screw V, with shank and thread having constant profile and dimensions. The anchoring device 44 according to the invention, contrary to device F, is a universal device which may be used for reciprocally connecting an element 3b of any material and structure to a supporting element 3, also of any material and structure.

With reference to figure 7, once anchor T has been introduced into a hole 2b made in element 3 and screw V has been screwed into anchor T, device F behaves as schematically shown in figure 7; the body of anchor T is axially (shortened) and radially (inflated) deformed up to take a "cask" shape; the maximum grip is therefore obtained only at the maximum diameter that can be taken by the deformed anchor T; if a gap is present into element 3 in such a position, the grip does not take place or it takes place unsatisfactorily; moreover, if the material with which element 3 is made is friable, the strong localized expansion of anchor T may damage element 3.

On the contrary, with device 44, as screw 7 is screwed into seat 6, modules M (and finally, modules M' and M1 in the end) get deformed ("get inflated") one at a time, in a sequence (and substantially independently of one other), finally taking the configuration shown in figure 7, in which each module M1, M' and M got deformed substantially in the same way and by the same extent, each module M, M' and M1 taking the typical "cask" shape.

Accordingly, the steady coupling between element 3 and system/device 44 is obtained along the whole lateral wall of hole 2 and without the risk of damaging the material of element 3. Wings 26 and 30 deeply fit into element 3 whereas edges 25 exert a continuous grip along the whole extension of portion 10; portion 27 also enlarges but only when screw 7 reaches the stroke end, due to the larger core diameter of the stretch 40 of screw 7. When anchor 1 is introduced into hole 2, moreover, the limited "roughness" of body 5 due to the presence of edges 25 does not damage the material of element 3 and does not cause a damage to body 5, while edges 24 do not even slightly touch hole 2, as they are brought by wings 17 substantially within seat 5 to then be "extracted" from body 5 as screw 7 couples within seat 5.

As already mentioned, device 44 is preferably provided with screw 7 (or 7b) partly pre-screwed into body 5 without this causing any deformation of the portion 31 of body 5 due to the reduced core diameter of the stretch 38 of shank 36. Moreover, according to a further aspect of the invention, seat 6, at module M1 and in general at portions 27 and 31 of body 5, has a larger inner diameter than the rest of seat 6, in particular such as to be larger than the crest diameter of the threads 41 and 42 of stretches 38 and 39 of screw 7 or 7b, but smaller than the core diameter of the stretch 40 of screw 7/7b.

Anchoring devices 44 may be made by means of the described structure, which devices provide for different anchor bodies 5, having two or more different sinking lengths L (figure 7); in fact, it is sufficient to match each sinking length increase with an additional module M.

Finally, it should be noted that in radial section, the profile of the inner surface of seat 6 is elliptical, in particular along the whole longitudinal extension of grooves 18a in order to both better drive screw 7/7b, and to better distribute, in particular in a more extended manner, the radial expansion pressure exerted on body 5 by the screwing of screw 7/7b therein.

## Claims

1. An anchoring device (44) comprising an expansion anchor and a screw insertable by screwing into an inner longitudinal seat (6) of a deformable body of the anchor provided partially pre-screwed into the body, **characterized in that**, in combination:
a) the expansion anchor (1) comprises a head (4) and the deformable tubular body (5), which is insertable in use into a hole (2) of at least one supporting element (3) and which extends along a longitudinal symmetry axis (A) of the anchor, within such a body being delimited said longitudinal seat (6), which is open at least towards the head and adapted to accommodate in use a tightening screw (7) therein, for locking the body into the hole, wherein at least one longitudinal portion (10) of the body (5), distal from the head (4), consists of a plurality of modules (M; M') longitudinally crossed by the screw seat (6) and adapted to be deformed in use, upon the progressive introduction of the screw into the seat, in a sequential and substantially even manner with respect to each other, the modules (M; M') being sequentially arranged along the symmetry axis (A) and being obtained integrally with each other and with the head (4), in a number proportional to a desired anchor sinking length (L); and
b) the screw (7) is adapted to be introduced, from the side of the head (4) of the anchor, into the longitudinal seat (6) open at least towards the head and obtained within said deformable tubular body (5) of the anchor, which body extends so as to protrude from the head; the screw (7) comprising a head (35) adapted in use to abut against an element (3b) to be anchored to the supporting element (3) where the anchor (1) is introduced (1) and/or against said head (4) of the anchor (1), and a shank (36) adapted to be screwed in use within the seat (6) of the anchor body for radially expanding the latter; wherein, from a free end (37) opposite to the screw head (35), the shank (36) comprises threaded stretches (38, 39, 40) axially arranged in sequence having core diameters increasing towards the head (35), different threading profile having, preferably, equal pitch, and crest diameters equal or increasing towards the head (35); a first stretch (38) of the screw shank, close to the free end in the longitudinal direction, having a substantially triangular and relatively sharp profile of the crests of thread (41); a second stretch (39) of the screw shank, immediately next to the first one in the longitudinal direction, having a substantially rounded, triangular profile of the crests of threads (42); and a third stretch (40) of the screw shank, immediately next to the second one in the longitudinal direction, having a profile of the crests of thread (43) with two different inclinations.

2. An anchoring device according to claim 1, **characterized in that** each module (M) is defined by an annular longitudinal stretch of the body (5) between pairs of first grooves (11) externally obtained on first opposite longitudinal bands (12) of a lateral wall (13) of the body and between pairs of second grooves externally obtained on second opposite longitudinal bands of the lateral wall (13) oriented, in a plane orthogonal to the axis (A), in a direction substantially orthogonal to the first bands (12); the first and second grooves (11, 14) having a smaller depth, measured in the radial direction, than a radial thickness of the lateral wall (13); each module (M; M') further including a pair of opposite slits (16; 16b) obtained radially through the whole lateral wall (13) at the second bands (15) and at least at part of the second grooves (14); said slits (16; 16b) being shaped so as to pull off, on the lateral wall between pairs of second grooves (14) immediately adjacent to each other and obtained on the same band (15), respective radially flexible, bridge-shaped wings (17) (17b) which connect the first bands (12) to each other and which extend so as to protrude from the first bands and along the second bands (15) in the direction of introduction of the screw into the seat (6).

3. An anchoring device according to claim 2, **characterized in that** along at least the whole distal longitudinal portion (10) from the head, the lateral wall (13) of the body has third longitudinal grooves (18a and 18b) obtained in pairs outside the body (5) and within the seat (6), the third grooves (18b) obtained outside the body (5) longitudinally delimiting, in pairs, the first and second bands (12, 15) and being angularly arranged at the opposite longitudinal end sides of at least one pair of opposite grooves (18a) within the seat (6) and, in combination with the latter, determining in use a radial mobility of respective zones (98, 99) of the lateral wall (13) of the body (5) provided at each module (M), for allowing said zones (98, 99) to get deformed in use in an opposite direction and against the hole walls, in response to the introduction of the screw (7) into the seat (6).

4. An anchoring device according to claim 3, **characterized in that** the second grooves (14), where they are not concerned by said slits (16), have a progressively increasing depth in the radial direction as they approach one end (8) of the body (5) opposite to said head (4), and therefore as they approach the slits (16), thus forming inclined planes (14b) arranged obliquely to the axis (A) and which have an inclination facing the axis (A); said inclined planes (14b) being adapted to promote in use a radial "hinged" movement of the wings (17), as well as contribute, together with said inner grooves (18a), to creating zones with a thinned thickness of the lateral wall (13) which contribute to the mobility of said areas (98 and 99); said second grooves (14) preferably extend on at least part of the first bands (12), each between a pair of first grooves (11), which in turn extend on at least part of the second bands (15), each to intercept a second groove (14).

5. An anchoring device according to one of claims 2 to 4, **characterized in that** looking at the body in a direction substantially perpendicular to the second bands, said slits (16) each comprise: a first perforation (19) having the shape of an isosceles triangle with rounded vertexes having the base facing the head; a second perforation (20), arranged upstream of the first one in the direction of introduction of the screw into the seat, substantially dovetail-shaped in the direction of introduction of the screw into the seat; and a longitudinal slot (21) obtained obliquely to the axis (A) and connecting the first and second perforations (19, 20) to each other.

6. An anchoring device according to one of claims 2 to 5, **characterized in that** looking at the body in a direction substantially perpendicular to the first bands, the first grooves (11) are shaped as arches having the convexity facing the head (4).

7. An anchoring device according to claim 6, **characterized in that** looking at the body in a direction substantially perpendicular to the second bands, the second grooves (14) are shaped substantially as arrow heads facing the side opposite to the head (4); an extension of the second grooves (14) on the first bands (12) bending with the convexity facing the head (4), to substantially reproduce the profile of the first grooves (11).

8. An anchoring device according to one of claims 2 to 7, **characterized in that** looking at the body in a direction substantially perpendicular to the second bands, said elastically deformable wings (17) are each substantially shaped as a V-shaped overhanging bridge having opposite branches (22) integrally connected in one piece to the body on the side facing the head, and vertex facing the side opposite to the head and forming a free end (23) of the wing which overhangly extends in the direction of introduction of the screw into the seat (6); said wings (17) being radially flexible both towards the axis (A), and so as to be adapted to take their free ends (23) to radially bend outwards from the body (5), due to the introduction of the screw (7) into the seat (6) in use, so as to be adapted to take in use their free ends (23) to place radially projecting so as to protrude from the body (5) up to interfere with the hole (2) of the at least one supporting element (3); said free ends (23) of the wings being provided with relatively sharp edges (24) and at least at two of said modules (M) closer to the head (4), they have radial inclined projections (100, 101).

9. An anchoring device according to one of claims 2 to 8, **characterized in that**, on the side of the head (4), said first grooves (11) are provided with a relatively sharp edge (25) which radially extends outwards to a minimum extent from the body (5); at least one of said modules (M'; M1) closer to the head (4) being further provided with a pair of substantially stiff wings (26) (30) which extend so as to protrude from the first bands (12) of the lateral wall (13) of the body, tangentially to the body (5) and from opposite sides thereof, obliquely projecting in a radial direction with respect to the axis.

10. An anchoring device according to claim 9, **characterized in that** between the head (4) and the longitudinal body portion (10) distal from the head, the body further comprises: a first middle longitudinal portion (27) including at least one module (M1) adapted to get deformed in use only after the deformation of all the modules (M, M') of said distal portion (10), upon the progressive introduction of the screw into the seat (6), defined by respective grooves or rims (28) obtained on the first bands (12) of the body and by respective radially through perforations (29) made through the second bands (15) of the body, so that each second module (M1) is provided on the second bands (15) with at least one pair of opposite radially flexible wings (17b) forming V-shaped overhanging bridges between the first bands (12) having the free end (23) facing the side opposite to the head (4) and provided with an asymmetric tooth (102) having a radially outer surface inclined to the side opposite to the head; and a second middle longitudinal portion (31), adjacent to the head, delimited by a substantially cylindrical outer surface (32) provided, on the second bands (15) of the body, with weakening grooves (33) of the lateral wall of the body arranged obliquely to the axis (A) and, within the seat (6) and at the first bands (12) of the body, with respective circumferential ribs (34) axially staggered relative to each other by a distance equal to the pitch of the screw (7) and inclined by an angle equal to the angle of the screw thread connectable in use to the body (5).

## Patentansprüche

1. Verankerungsvorrichtung (44), aufweisend einen Spreizanker und eine durch Verschrauben in einen inneren, longitudinalen Sitz (6) eines verformbaren Körpers des Ankers einsetzbare Schraube, welche zum Teil in den Körper vorgeschraubt bereitgestellt ist, **dadurch gekennzeichnet, dass** in Kombination:
a) der Spreizanker (1) einen Kopf (4) und den verformbaren, rohrförmigen Körper (5) aufweist, welcher im Einsatz in ein Loch (2) von mindestens einem Trägerelement (3) einsetzbar ist und welcher sich entlang einer longitudinalen Symmetrieachse (A) des Ankers erstreckt, wobei innerhalb eines solchen Körpers der longitudinale Sitz (6) abgegrenzt ist, welcher zumindest in Richtung des Kopfes offen und dafür angepasst ist, um im Einsatz eine Festspannschraube (7) darin aufzunehmen, um den Körper in dem Loch zu verriegeln, wobei mindestens ein longitudinaler Abschnitt (10) des Körpers (5), welcher von dem Kopf (4) abgelegen ist, aus einer Vielzahl von Modulen (M; M') besteht, welche longitudinal von dem Schraubensitz (6) durchkreuzt werden und dafür angepasst sind, im Einsatz nach schrittweiser Einführung der Schraube in den Sitz in einer sequentiellen und im Wesentlichen gleichmäßigen Art in Bezug zueinander verformt zu werden, wobei die Module (M; M') entlang der Symmetrieachse (A) sequentiell angeordnet sind und miteinander und mit dem Kopf (4) integral in einer Anzahl erzielt werden, welche proportional zu einer gewünschten Ankereindringtiefe (L) ist; und
b) die Schraube (7) dafür angepasst ist, von der Seite des Kopfes (4) des Ankers in den longitudinalen Sitz (6), welcher zumindest in Richtung des Kopfes offen ist und innerhalb des verformbaren rohrförmigen Körpers (5) des Ankers erzielt wird, eingeführt zu werden, welcher Körper sich derartig erstreckt, um vom Kopf vorzustehen; wobei die Schraube (7) einen Kopf (35), welcher im Einsatz dafür angepasst ist, an einem an dem Trägerelement (3) zu verankerndem Element (3b), wo der Anker (1) eingeführt ist (1), und/oder an dem Kopf (4) des Ankers (1) anzuliegen, und einen Schaft (36) aufweist, welcher dafür angepasst ist, im Einsatz in den Sitz (6) des Ankerkörpers eingeschraubt zu werden, um den Letzteren radial zu spreizen; wobei der Schaft (36) von einem dem Schraubenkopf (35) gegenüber liegenden freien Ende (37) Gewindestrecken (38, 39, 40) aufweist, welche axial in Reihe angeordnet sind, welche in Richtung des Kopfes (35) ansteigende Kerndurchmesser, unterschiedliches Gewindeprofil mit vorzugsweise gleicher Steigung und gleiche oder in Richtung des Kopfes (35) ansteigende Scheiteldurchmesser besitzen; wobei eine erste Strecke (38) des Schraubenschaftes nah am freien Ende in der longitudinalen Richtung ein im Wesentlichen dreieckiges und relativ scharfes Profil der Gewindespitzen (41) besitzt; wobei eine zweite Strecke (39) des Schraubenschaftes, welche direkt die nächste zu der ersten in der longitudinalen Richtung ist, ein im Wesentlichen abgerundetes, dreieckiges Profil der Gewindespitzen (42) besitzt; und wobei eine dritte Strecke (40) des Schraubenschaftes, welche direkt die nächste zu der zweiten in der longitudinalen Richtung ist, ein Profil der Gewindespitzen (43) mit zwei verschiedenen Neigungen besitzt.

2. Verankerungsvorrichtung nach Anspruch 1, **dadurch gekennzeichnet, dass** jedes Modul (M) von einer ringförmigen longitudinalen Strecke des Körpers (5) zwischen Paaren von ersten Nuten (11), welche außen auf ersten gegenüber liegenden Streifen (12) einer Seitenwand (13) des Körpers erzielt werden, und zwischen Paaren von zweiten Nuten definiert wird, welche außen auf zweiten gegenüber liegenden longitudinalen Streifen der Seitenwand (13) erzielt werden, welche in einer senkrechten Ebene zur Achse (A) in einer im Wesentlichen senkrecht zu den ersten Streifen (12) stehenden Richtung orientiert sind; wobei die ersten und zweiten Nuten (11, 14) eine in radialer Richtung gemessene Tiefe aufweisen, welche geringer als eine radiale Dicke der Seitenwand (13) ist; wobei jedes Modul (M; M') weiter ein Paar von gegenüber liegenden Schlitzen (16; 16b) aufweist, welche radial durch die ganze Seitenwand (13) an den zweiten Streifen (15) und an zumindest teilweise den zweiten Nuten (14) erzielt werden; wobei die Schlitze (16; 16b) so gestaltet sind, um an der Seitenwand zwischen Paaren von zweiten Nuten (14), welche direkt benachbart zueinander sind und auf demselben Streifen (15) erzielt sind, jeweils radial flexible brückenförmige Flügel (17) (17b) abzuziehen, welche die ersten Streifen (12) miteinander verbinden und welche sich so erstrecken, dass sie von den ersten Streifen und entlang den zweiten Streifen (15) in der Einführrichtung der Schraube in den Sitz (6) hervorstehen.

3. Verankerungsvorrichtung nach Anspruch 2, **dadurch gekennzeichnet, dass** entlang des ganzen vom Kopf abgelegenen Abschnitts (10) die Seitenwand (13) des Körpers dritte longitudinale Nuten (18a und 18b) aufweist, welche paarweise außerhalb des Körpers (5) und innerhalb des Sitzes (6) erzielt werden, wobei die außerhalb des Körper (5) erzielten dritten Nuten (18b) paarweise das erste und zweite Band (12, 15) longitudinal begrenzen und an den gegenüber liegenden longitudinalen Endseiten von mindestens einem Paar von gegenüber liegenden Nuten (18a) innerhalb des Sitzes (6) ringförmig angeordnet sind, und in Kombination mit den Letzteren im Einsatz eine radiale Beweglichkeit von jeweiligen Bereichen (98, 99) der Seitenwand (13) des Körpers (5) festlegen, welche an jedem Modul (M) vorgesehen sind, um es den Bereichen (98, 99) zu ermöglichen, im Einsatz als Reaktion auf die Einführung der Schraube (7) in den Sitz (6) in einer entgegengesetzten Richtung und gegen die Lochwände verformt zu werden.

4. Verankerungsvorrichtung nach Anspruch 3, **dadurch gekennzeichnet, dass** die zweiten Nuten (14), wo sie nicht von den Schlitzen (16) betroffen sind, eine schrittweise zunehmende Tiefe in der radialen Richtung aufweisen, wenn sie sich einem dem Kopf (4) entgegengesetzten Ende (8) des Körpers (5) nähern, und deshalb, wenn sie sich den Schlitzen (16) nähern, so geneigte Ebenen (14b) bilden, welche schräg zur Achse (A) angeordnet sind und welche eine der Achse (A) zugewandte Neigung besitzen; wobei die geneigten Ebenen (14b) dafür angepasst sind, im Einsatz eine radiale "klappbare" Bewegung der Flügel (17) zu begünstigen, sowie zusammen mit den inneren Nuten (18a) dazu beizutragen, um Bereiche mit konisch zulaufender Dicke der Seitenwand (13) zu bilden, was zur Beweglichkeit der Bereiche (98 und 99) beiträgt; wobei die zweiten Nuten (14) sich vorzugsweise zumindest teilweise auf den ersten Streifen (12) erstrecken, jede zwischen einem Paar von ersten Nuten (11), welche sich wiederum zumindest teilweise auf den zweiten Streifen (15) erstrecken, um jeweils eine zweite Nut (14) zu schneiden.

5. Verankerungsvorrichtung nach einem der Ansprüche 2 bis 4, **dadurch gekennzeichnet, dass** unter Betrachtung des Körpers in einer Richtung, welche im Wesentlichen senkrecht zu den zweiten Streifen ist, die Schlitze (16) jeweils Folgendes aufweisen: einen ersten Durchbruch (19), welcher die Gestalt eines gleichschenkligen Dreiecks mit abgerundeten Eckpunkten besitzt, dessen Basis dem Kopf zugewandt ist; einen zweiten Durchbruch (20), welcher in der Einführrichtung der Schraube in den Sitz stromaufwärts des ersten angeordnet und im Wesentlichen schwalbenschwanzförmig in der Einführrichtung der Schraube in den Sitz ist; und einen longitudinalen Spalt (21), welcher schräg zur Achse (A) erzielt wird und den ersten und zweiten Durchbruch (19, 20) miteinander verbindet.

6. Verankerungsvorrichtung nach einem der Ansprüche 2 bis 5, **dadurch gekennzeichnet, dass** unter Betrachtung des Körpers in einer Richtung, welche im Wesentlichen senkrecht zu den ersten Streifen ist, die ersten Nuten (11) als Bögen mit der dem Kopf (4) zugewandten Konvexität gestaltet sind.

7. Verankerungsvorrichtung nach Anspruch 6, **dadurch gekennzeichnet, dass** unter Betrachtung des Körpers in einer Richtung, welche im Wesentlichen senkrecht zu den zweiten Streifen ist, die zweiten Nuten (14) im Wesentlichen als der dem Kopf (4) gegenüber liegenden Seite zugewandten Pfeilspitze gestaltet sind; wobei eine Verlängerung der zweiten Nuten (14) auf den ersten Streifen (12) sich mit der dem Kopf (4) zugewandten Konvexität krümmen, um im Wesentlichen das Profil der ersten Nuten (11) nachzubilden.

8. Verankerungsvorrichtung nach einem der Ansprüche 2 bis 7, **dadurch gekennzeichnet, dass** unter Betrachtung des Körpers in einer Richtung, welche im Wesentlichen senkrecht zu den zweiten Streifen ist, die elastisch verformbaren Flügel (17) jeweils im Wesentlichen als eine V-förmige überhängende Brücke mit gegenüber liegenden Zweigen (22) gestaltet sind, welche integral in einem Stück mit dem Körper auf der dem Kopf zugewandten Seite verbunden sind und wobei der Eckpunkt der dem Kopf gegenüber liegenden Seite zugewandt ist und ein freies Ende (23) des Flügels bildet, welcher sich überhängend in der Einführrichtung der Schraube in den Sitz (6) erstreckt; wobei die Flügel (17) jeweils zur Achse (A) hin radial flexibel sind, um so angepasst zu sein, um ihre freien Enden (23) zu nehmen, um aufgrund des Einführens der Schraube (7) in den Sitz (6) im Einsatz vom Körper (5) radial nach außen zu biegen, um so angepasst zu sein, um im Einsatz ihre freien Enden (23) zu nehmen, um radial vorspringend zu platzieren, um so vom Körper (5) hervorzustehen, bis sie mit dem Loch (2) des mindestens einen Trägerelements (3) in Eingriff gelangen; die freien Enden (23) der Flügel, welche mit relativ scharfen Kanten (24) und mindestens bei zwei der näher zum Kopf (4) liegenden Modulen (M) versehen sind, radial geneigte Vorsprünge (100, 101) besitzen.

9. Verankerungsvorrichtung nach einem der Ansprüche 2 bis 8, **dadurch gekennzeichnet, dass** auf der Seite des Kopfes (4) die ersten Nuten (11) mit einer relativ scharfen Kante (25) versehen sind, welche sich vom Körper (5) in einem geringen Maße radial nach außen erstreckt; mindestens eines der näher zum Kopf (4) liegenden Module (M'; M1) weiter mit einem Paar von im Wesentlichen steifen Flügeln (26) (30) versehen ist, welche sich derartig erstrecken, um von den ersten Streifen (12) der Seitenwand (13) des Körpers tangential zu dem Körper (5) und von gegenüber liegenden Seiten davon hervorzustehen, um in einer radialen Richtung in Bezug auf die Achse schräg vorzuspringen.

10. Verankerungsvorrichtung nach Anspruch 9, **dadurch gekennzeichnet, dass** zwischen dem Kopf (4) und dem von dem Kopf abgelegenen longitudinalen Körperabschnitt (10) der Körper weiter Folgendes aufweist: einen ersten mittleren longitudinalen Abschnitt (27), welcher mindestens ein Modul (M1) aufweist, welches dafür angepasst ist, um im Einsatz erst nach Verformung sämtlicher Module (M, M') des abgelegenen Abschnitts (10) verformt zu werden bei schrittweiser Einführung der Schraube in den Sitz (6), welcher durch auf den ersten Streifen (12) des Körpers erzielte jeweilige Nuten oder Ränder (28) und durch jeweilige durch die zweiten Streifen (15) des Körpers ausgeführte Durchbrüche (29) definiert ist, so dass jedes zweite Modul (M1) auf den zweiten Streifen (15) mit mindestens einem Paar von gegenüber liegenden radial flexiblen Flügeln (17b) versehen ist, welche V-förmige überhängende Brücken zwischen den ersten Streifen (12) bilden, wobei das freie Ende (23) der dem Kopf (4) gegenüber liegenden Seite zugewandt ist und mit einem asymmetrischen Zahn (102) versehen ist, welcher eine radial äußere Fläche aufweist, welche zu der dem Kopf gegenüber liegenden Seite geneigt ist; und einen zweiten mittleren longitudinalen Abschnitt (31), welcher zum Kopf benachbart ist und von einer im Wesentlichen zylindrischen äußeren Fläche (32) begrenzt wird, welcher auf den zweiten Streifen (15) des Körpers mit schwächenden Nuten (33) der Seitenwand versehen ist, welche schräg zur Achse (A) und innerhalb des Sitzes (6) und an den ersten Bändern (12) des Körpers mit jeweiligen umlaufenden Rippen (34) eingerichtet sind, welche in Bezug Zueinander um einen Abstand gestaffelt sind, welcher gleich der Steigung der Schraube (7) ist, und um einen Winkel geneigt sind, welcher gleich dem Winkel des im Einsatz mit dem Körper (5) verbindbaren Schraubengewindes ist.

## Revendications

1. Dispositif d'ancrage (44) comprenant une coquille d'expansion et une vis pouvant être insérée par vissage dans le siège intérieur (6) longitudinal d'un corps déformable de l'ancrage et disposée prévu partiellement pré-vissée dans le corps,
**caractérisé en ce que**, en combinaison :
a) la coquille d'expansion (1) comprend une tête (4) et le corps (5) tubulaire déformable, qu'en usage on peut introduire dans un trou (2) d'au moins un élément de support (3) et qui s'étend le long d'un axe longitudinal (A) de symétrie de l'ancrage, à l'intérieur duquel corps est délimité ledit siège (6) longitudinal, qui est ouvert au moins vers la tête et apte à accueillir à son intérieur, en usage, une vis (7) de serrage, pour bloquer le corps dans le trou, dans lequel au moins une partie longitudinale (10) du corps (5), distale de la tête (4), est constituée d'une pluralité de modules (M ; M') traversés longitudinalement par le siège (6) de vis et aptes à se déformer en cours d'utilisation, suite à l'introduction progressive de la vis dans le siège, de manière séquentielle et sensiblement uniforme l'un par rapport à l'autre, les modules (M ; M') étant disposés en séquence le long de l'axe de symétrie (A) et étant obtenus d'une seule pièce les uns avec les autres et avec la tête (4), en nombre proportionnel à la longueur (L) d'enfoncement de l'ancrage souhaitée ; et
b) la vis (7) est apte à être introduite, depuis le côté de la tête (4) de l'ancrage, dans le siège longitudinal (6) ouvert au moins vers la tête et obtenu à l'intérieur dudit corps (5) tubulaire déformable de l'ancrage, lequel corps s'étend de façon à dépasser de la tête ; la vis (7) comprenant une tête (35) apte en usage à venir en butée contre un élément (3b) à ancrer à l'élément de support (3) là où on introduit l'ancrage (1) et/ou contre ladite tête (4) de l'ancrage (1), et une tige (36) apte en usage à être vissée dans le siège (6) du corps d'ancrage pour dilater radialement ce dernier ; dans laquelle, en partant d'une extrémité libre (37) opposée à la tête (35) de vis, la tige (36) comprend des tronçons filetés (38, 39, 40) disposés l'un après l'autre suivant l'axe, présentant des diamètres à fond de filet en augmentation vers la tête (35) et des profils de filetage différents ayant, de préférence, un pas constant et un diamètre au sommet constant ou en augmentation vers la tête (35) ; une première section (38) de la tige de vis, proche de l'extrémité libre dans le sens longitudinal, présentant un profil sensiblement triangulaire et un profil des sommets (41) de filet relativement pointu ; une deuxième section (39) de la tige de vis, immédiatement à côté de la première dans le sens longitudinal, présentant un profil des sommets (42) de filet triangulaire, sensiblement arrondi ; et une troisième section (40) de la tige de vis, immédiatement à côté de la deuxième dans le sens longitudinal, présentant un profil des sommets (43) de filet ayant deux inclinaisons différentes.

2. Dispositif d'ancrage selon la revendication 1, **caractérisé en ce que** chaque module (M) est défini par une section longitudinale annulaire du corps (5) entre des paires de premières rainures (11) obtenues à l'extérieur sur des premières bandes (12) longitudinales opposées d'une paroi latérale (13) du corps et entre des paires de deuxièmes rainures obtenues à l'extérieur sur des secondes bandes longitudinales opposées de la paroi latérale (13) du corps orientées, dans un plan perpendiculaire à l'axe (A), dans une direction sensiblement perpendiculaire aux premières bandes (12) ; les premières et deuxièmes rainures (11, 14) ayant une profondeur, mesurée dans la direction radiale, inférieure à l'épaisseur radiale de la paroi latérale (13) ; chaque module (M ; M') comprenant en outre une paire de fentes opposées (16 ; 16b) obtenues radialement à travers la totalité de la paroi latérale (13) au niveau des secondes bandes (15) et d'au moins une partie des deuxièmes rainures (14) ; lesdites fentes (16 ; 16b) étant conformées de façon à détacher, sur la paroi latérale entre les paires de deuxièmes rainures (14) immédiatement adjacentes l'une à l'autre et obtenues sur la même bande (15), des ailettes respectives (17, 17b) souples radialement, façonnées en pont qui relient entre elles les premières bandes (12) et qui s'étendent de façon à dépasser des premières bandes et le long des secondes bandes (15) dans le sens d'introduction de la vis dans le siège (6).

3. Dispositif d'ancrage selon la revendication 2, **caractérisé en ce que** le long d'au moins toute la partie longitudinale distale (10) de la tête, la paroi latérale (13) du corps comporte des troisièmes rainures longitudinales (18a, 18b) obtenue par paires à l'extérieur du corps (5) et à l'intérieur du siège (6), les troisièmes rainures (18b) obtenues à l'extérieur du corps (5) délimitant longitudinalement, par paires, les premières et secondes bandes (12, 15) et étant disposées angulairement au niveau des côtés terminaux longitudinaux opposés d'au moins une paire de rainures opposées (18a) à l'intérieur du siège (6) et, en combinaison avec ces dernières, déterminant en usage une mobilité radiale de zones respectives (98, 99) de la paroi latérale (13) du corps (5) disposées au niveau de chaque module (M), pour permettre en usage auxdites zones (98, 99) de se déformer en sens opposé et contre les parois du trou, en réaction à l'introduction de la vis (7) dans le siège (6).

4. Dispositif d'ancrage selon la revendication 3, **caractérisé en ce que** les deuxièmes rainures (14), là où elles ne sont pas concernées par lesdites fentes (16), ont une profondeur qui augmente progressivement dans la direction radiale plus elles s'approchent d'une extrémité (8) du corps (5) opposée à ladite tête (4) et, par conséquent, plus elles se rapprochent des fentes (16), formant ainsi des plans inclinés (14b) disposés obliquement par rapport à l'axe (A) et qui présentent une inclinaison tournée vers l'axe (A) ; lesdits plans inclinés (14b) étant aptes à favoriser en usage un mouvement radial "en charnière" des ailettes (17), ainsi qu'à contribuer, en même temps que lesdites rainures intérieures (18a), à créer des zones ayant une épaisseur amincie de la paroi latérale (13) qui contribuent à la mobilité desdites zones (98, 99) ; de préférence lesdites deuxièmes rainures (14) se prolongent sur au moins une partie des premières bandes (12), chacune entre une paire de premières rainures (11), lesquelles, à leur tour, se prolongent sur au moins une partie des secondes bandes (15), chacune jusqu'à intercepter une deuxième rainure (14).

5. Dispositif d'ancrage selon l'une quelconque des revendications 2 à 4, **caractérisé en ce que**, si l'on regarde le corps dans une direction sensiblement perpendiculaire aux secondes bandes, lesdites fentes (16) comprennent chacune : une première perforation (19) ayant la forme d'un triangle isocèle aux sommets arrondis dont la base est tournée vers la tête ; une seconde perforation (20), disposée en amont de la première dans le sens d'introduction de la vis dans le siège, façonnée sensiblement en queue d'aronde dans le sens d'introduction de la vis dans le siège ; et une fente longitudinale (21) obtenue obliquement par rapport à l'axe (A) et raccordant entre elles les première et seconde perforations (19, 20).

6. Dispositif d'ancrage selon l'une quelconque des revendications 2 à 5, **caractérisé en ce que**, si l'on regarde le corps dans une direction sensiblement perpendiculaire aux premières bandes, les premières rainures (11) sont conformées comme des arches dont la convexité est tournée vers la tête (4).

7. Dispositif d'ancrage selon la revendication 6, **caractérisé en ce que**, si l'on regarde le corps dans une direction sensiblement perpendiculaire aux secondes bandes, les deuxièmes rainures (14) sont conformées sensiblement comme des pointes de flèche tournées du côté opposé à la tête (4) ; un prolongement des deuxièmes rainures (14) sur les premières bandes (12) s'incurvant avec la convexité tournée vers la tête (4) pour reproduire sensiblement le profil des premières rainures (11).

8. Dispositif d'ancrage selon l'une quelconque des revendications 2 à 7, **caractérisé en ce que**, si l'on regarde le corps dans une direction sensiblement perpendiculaire aux secondes bandes, lesdites ailes (17) élastiquement déformables sont chacune conformées sensiblement en pont en encorbellement profilé en V comportant des branches opposées (22) raccordées d'une seule pièce avec le corps du côté tourné vers la tête et un sommet tourné du côté opposé à la tête et constituant une extrémité libre (23) de l'ailette qui s'étend en surplomb dans le sens d'introduction de la vis dans le siège (6) ; lesdites ailettes (17) étant radialement flexibles tant vers l'axe (A) que de façon à être aptes à amener leurs extrémités libres (23) à fléchir radialement vers l'extérieur du corps (5), sous l'effet de l'introduction en usage de la vis (7) dans le siège (6), de façon à être aptes à amener en usage leurs extrémités libres (23) à se placer en saillie radiale de façon à dépasser du corps (5) jusqu'à interférer avec le trou (2) dudit élément de support (3) ; lesdites extrémités libres (23) des ailettes étant pourvues de bords (24) relativement pointus et, au moins au niveau de deux desdits modules (M) les plus proches de la tête (4), présentant des saillies inclinées (100, 101) radiales.

9. Dispositif d'ancrage selon l'une quelconque des revendications 2 à 8, **caractérisé en ce que**, lesdites premières rainures (11) sont pourvues, du côté de la tête (4), d'un bord (25) relativement affilé qui saille dans une moindre mesure radialement vers l'extérieur du corps (5) ; au moins un desdits modules (M' ; M1) le plus proche de la tête (4) étant en outre pourvu d'une paire d'ailettes (26, 30) essentiellement rigides qui s'étendent en saillie depuis les premières bandes (12) de la paroi latérale (13) du corps, tangentiellement au corps (5) et depuis les côtés opposés de celui-ci, en se forjetant obliquement en direction radiale par rapport à l'axe.

10. Dispositif d'ancrage selon la revendication 9, **caractérisé en ce que**, entre la tête (4) et la partie longitudinale (10) du corps distale par rapport à la tête, le corps comprend en outre : une première partie (27) longitudinale intermédiaire comprenant au moins un module (M1) apte à se déformer en usage seulement après la déformation de tous les modules (M, M') de ladite partie distale (10), suite à l'introduction progressive de la vis dans le siège (6), module défini par des rainures ou bourrelets (28) respectifs obtenus sur les premières bandes (12) du corps et par respectivement des perforations (29) traversantes radialement pratiquées dans les secondes bandes (15) du corps, de sorte que chaque second module (M1) est pourvu sur les secondes bandes (15) d'au moins une paire d'ailettes opposées (17b) flexibles radialement constituant des ponts en encorbellement profilés en V entre les premières bandes (12) comportant l'extrémité libre (23) tournée du côté opposé à la tête (4) et pourvue d'une dent asymétrique (102) ayant une surface radialement extérieure inclinée du côté opposé à la tête ; et une seconde partie longitudinale intermédiaire (31), adjacente à la tête, délimitée par une surface extérieure sensiblement cylindrique (32) pourvue, sur les secondes bandes (15) du corps, de rainures (33) d'affaiblissement de la paroi latérale du corps disposées obliquement par rapport à l'axe (A) et, à l'intérieur du siège (6) et au niveau des premières bandes (12) du corps, de nervures circonférentielles (34) respectives décalées axialement entre elles d'une distance égale au pas de la vis (7) et inclinées d'un angle égal à l'angle du filetage de vis pouvant en usage être accouplé au corps (5).
